(19) Europäisches Patentamt
European Patent Office
Office européen des brevets

(11) **EP 0 780 250 B1**

(12) **FASCICULE DE BREVET EUROPEEN**

(45) Date de publication et mention de la délivrance du brevet:
**02.04.2003 Bulletin 2003/14**

(51) Int Cl.⁷: **B60G 15/07**

(21) Numéro de dépôt: **96119526.0**

(22) Date de dépôt: **05.12.1996**

(54) **Réglage précis d'une jambe de force de suspension MacPherson: moyens de réglage sur la jambe et banc de mesure**

Feineinstellung eines MacPherson-Federbeines: Vorrichtung zur Einstellung auf dem Federbein und Bank zum Messen

Fine adjustment of a MacPherson suspension strut: means for adjusting on the strut and measuring bench

(84) Etats contractants désignés:
**BE DE ES FR GB IT SE**

(30) Priorité: **19.12.1995 FR 9515891**
**26.03.1996 FR 9603921**

(43) Date de publication de la demande:
**25.06.1997 Bulletin 1997/26**

(73) Titulaire: **COMPAGNIE GENERALE DES ETABLISSEMENTS MICHELIN-MICHELIN & CIE F-63040 Clermont-Ferrand Cédex 01 (FR)**

(72) Inventeurs:
• **Ducloux, Antoine**
**63670 La Roche-Blanche (FR)**
• **Faure, Jack**
**63130 Royat (FR)**
• **Foulquier, Jacques**
**63118 Cebazat (FR)**
• **Orsat, Thierry**
**63100 Clermont-Ferrand (FR)**

(74) Mandataire: **Bauvir, Jacques Michelin & Cie, Service SGD/LG/PI Ladoux 63040 Clermont-Ferrand Cedex 01 (FR)**

(56) Documents cités:
EP-A- 0 092 066          DE-A- 1 801 676
DE-A- 3 312 453          DE-A- 4 102 742
FR-A- 2 641 741          GB-A- 2 100 681
US-A- 4 026 578          US-A- 4 424 697
US-A- 4 800 751          US-A- 4 863 187

• PATENT ABSTRACTS OF JAPAN vol. 013, no. 299 (M-847), 11 juillet 1989 & JP 01 090807 A (MAZDA MOTOR CORP), 7 avril 1989,

**Description**

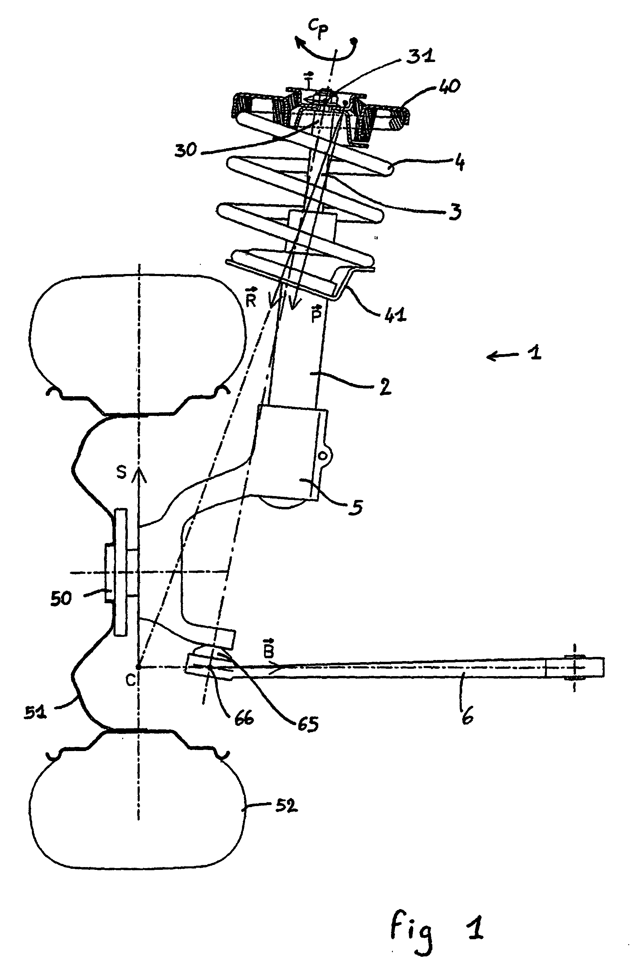

La présente invention concerne les suspensions de type Mac Pherson. La figure 1 représente une telle suspension. On sait que ce type de suspension comporte une jambe de force 1 constituée essentiellement par un amortisseur participant en même temps au guidage de la roue.

L'amortisseur comporte un corps 2 et une tige 3. L'extrémité supérieure 30 de la tige prend appui sur la caisse du véhicule en un point d'articulation 31 matérialisé en général par une articulation élastique. Un ressort hélicoïdal 4 est monté entre une coupelle supérieure 40 et une coupelle inférieure 41. La coupelle inférieure 41 prend appui sur le corps 2 de l'amortisseur et la coupelle supérieure 40 prend appui sur la caisse du véhicule, en général aussi par l'intermédiaire d'un filtrage réalisé par ladite articulation élastique, filtrage qui peut dans certaines réalisations être le même pour le ressort et pour l'amortisseur.

Par ailleurs, le corps 2 est rendu solidaire d'un porte-moyeu 5. Il n'y a donc aucun degré de liberté entre le corps 2 et le porte-moyeu 5. Un bras inférieur 6 est articulé d'un côté sur la caisse du véhicule et de l'autre sur le porte-moyeu 5 par l'articulation 65. Le porte-moyeu 5 supporte un moyeu 50, sur lequel est montée une roue 51 équipée de son pneu 52.

Dans la zone d'attache sur la caisse, la jambe de force 1 exerce des efforts sur la caisse en provenance à la fois du ressort et de l'amortisseur. Bien que la localisation exacte du point d'application de ces efforts soit difficile, et dépende notamment de la construction exacte de la jambe de force 1, il est connu que la maîtrise de l'effort tranchant que subit la tige 3 de l'amortisseur est déterminante pour le bon fonctionnement des suspensions de ce type. Pour simuler une suspension Mac Pherson, on peut considérer la réaction $\vec{R}$ de la caisse du véhicule sur la jambe de force. Sa direction passe par le point C, celui-ci étant défini par l'intersection de l'effort $\vec{B}$ exercé par le bras inférieur 6 sur l'articulation 65 et de la résultante des forces $\vec{S}$ que le sol exerce sur le pneu 52. En première approximation, le véhicule étant immobile, ladite résultante $\vec{S}$ est orientée verticalement et passe par le centre de l'aire de contact du pneu (la valeur de cet effort au roulage en ligne droite et à vitesse stabilisée dépend des caractéristiques du pneu et des réglages de la géométrie du train avant). L'intersection de $\vec{B}$ et de $\vec{S}$ donne le point C. La réaction $\vec{R}$ se partage entre la poussée $\vec{P}$ du ressort et un effort tranchant $\vec{T}$ appliqué à la tige 3 de l'amortisseur, dans une direction perpendiculaire à ladite tige 3, de telle sorte que l'on respecte la relation suivante : $\vec{R} = \vec{T} + \vec{P}$ (somme vectorielle).

Pour obtenir un bon fonctionnement de la jambe (pas ou peu de frottements secs, usure minime, ...), on sait qu'il convient de contrôler très étroitement l'effort tranchant $\vec{T}$ appliqué à la tige 3. A cette fin, il a déjà été proposé d'incliner l'axe du ressort 4 par rapport à l'axe de la tige 3, comme cela est représenté au dessin. C'est ainsi que presque toutes les suspensions Mac Pherson utilisées actuellement comportent un ressort dont l'axe n'est pas confondu avec celui de la tige de l'amortisseur. L'inclinaison de ce ressort 4 a été calculée pour minimiser l'effort tranchant sur la tige 3. On peut trouver un exemple de cet état de la technique dans la demande FR 2 641 741 correspondant au préambule de la revendication 1. La demande EP 0 092 066 décrit un exemple d'une jambe de force pour une roue directrice correspondant au préambule de la revendication 9.

Par ailleurs, les recherches du déposant l'on conduit à observer que la résultante des efforts exercés par le ressort est susceptible d'exercer un couple Cp autour de l'axe de pivot, défini par le point d'articulation 31 et le centre 66 de l'articulation 65. Ce couple agit sur l'équilibre du système de direction. Pour obtenir un bon fonctionnement du système de direction, il est nécessaire de bien maîtriser (par exemple de minimiser) l'effet combiné des couples Cp issus des jambes droite et gauche.

Malheureusement, de nombreuses voitures souffrent encore à l'heure actuelle de mauvaises caractéristiques de suspensions et/ou de direction. Le comportement dynamique d'un véhicule dépend d'une quantité considérable de paramètres, dont certains ont une influence encore mal connue mais qui peut très bien être pourtant prépondérante. Il en résulte que, alors même que le concepteur a bien respecté toutes les règles de l'art pour concevoir la suspension, le résultat n'est pas toujours à la hauteur du soin apporté à la conception.

La présente invention propose des moyens permettant l'optimisation pratique de chacun des véhicules fabriqués en série. En effet, il s'est avéré que les inévitables dispersions des caractéristiques de tous les composants de la suspension, et plus précisément de la jambe de force, pouvaient causer des variations de comportement assez importantes d'un véhicule à l'autre. L'invention propose les éléments nécessaires à l'optimisation et une méthode d'optimisation de la répartition de la réaction $\vec{R}$ entre la poussée $\vec{P}$ du ressort 4 et l'effort tranchant $\vec{T}$ dans la tige 3, ainsi que du couple Cp exercé par le ressort autour de l'axe de pivot.

L'invention propose d'introduire, dans une jambe de force comportant un ressort dont l'inclinaison a été calculée préalablement de façon à ce que l'effort tranchant résiduel $\vec{T}$ soit optimisé, par exemple rendu aussi faible que possible, des éléments permettant d'ajuster plus finement la valeur de cet effort tranchant résiduel $\vec{T}$ ou du couple Cp. De la sorte, il devient possible de tenir compte des dispersions de caractéristiques, notamment des ressorts, qui semblent être responsables de dispersions très importantes de l'effort tranchant $\vec{T}$ et du couple Cp effectivement obtenus sur les véhicules de série.

L'objectif de l'invention est de pouvoir agir sur la localisation des centres de poussée du ressort sur la coupelle supérieure et sur la coupelle inférieure, ainsi que sur l'orientation desdites poussées, sans agir sur les paramètres habituels de géométrie d'une suspension, que sont l'angle de carrossage, l'angle d'inclinaison du pivot, et l'angle de chasse, qui restent inchangés.

L'invention propose une jambe de force pour suspension de roue de type Mac Pherson, comportant les caractéristiques définies dans la revendication 1 et dans la revendication 9.

L'invention sera mieux comprise par la description qui va suivre, d'un exemple donné à titre non limitatif, en se référant au dessin annexé sur lequel :

la figure 1 montre une suspension Mac Pherson,
les figures 2 à 4 et 8 à 12 illustrent un réglage par excentrique agissant par déplacement de la coupelle inférieure par rapport à l'axe de la tige de l'amortisseur,
les figures 5 à 7 et 13 à 15 illustrent un réglage par variation de l'inclinaison de la coupelle inférieure par rapport à l'orientation de la tige de l'amortisseur,
les figures 16 et 17 illustrent un réglage par variation géométrique de l'appui du ressort sur la coupelle,
les figures 18 à 21 illustrent un réglage agissant par translation de la coupelle inférieure par rapport à l'axe de la tige d'amortisseur.
les figures 26 et 27 montrent, de face et de côté, une suspension McPherson pour roue directrice,
les figures 28 et 29 schématisent les principaux axes en présence et les forces principales,
les figures 30, 31 et 32 illustrent une possibilité de réglage,
les figures 33 et 34 illustrent un équipement pour réglage par commande électrique.

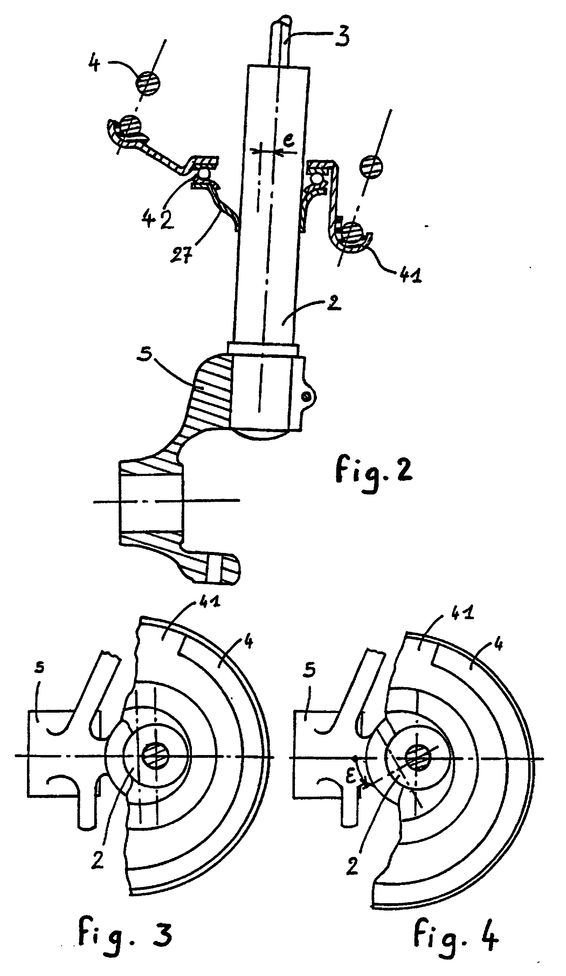

Aux figures 2 à 7, on décrit des jambes de forces pour lesquelles le réglage s'effectue par rotation relative du corps 2 de l'amortisseur par rapport au porte-moyeu 5. Dans ce cas, les moyens d'accrochage à un porte-moyeu comportent des moyens d'indexation (c'est à dire de repérage) de l'orientation relative du corps de l'amortisseur par rapport au porte-moyeu, lesdits moyens d'indexations étant disposés sur ou au voisinage de la portée d'accrochage. C'est par exemple un secteur gradué permettant de repérer et de faire évoluer la position relative du corps 2 par rapport au porte-moyeu 5. On agit ainsi sur la position angulaire relative et/ou sur l'excentration de la coupelle inférieure.

Avant de décrire les moyens de réglage explicités ci-dessous, rappelons que, dans le cas de roues directrices, la jambe de force comporte une butée à bille 42 visible aux figures 2, 5, 6, 8 à 14, et 26 à 30 dont le rôle est que le braquage ne soit pas contrarié par le ressort 4.

Dans le cas d'une jambe de force dans laquelle la butée à billes 42 est située sous la coupelle inférieure 41 d'appui du ressort 4, la butée à billes 42 est centrée sur une collerette excentrique 27, pour décaler le centre de la butée à bille 42 d'une distance e par rapport à l'axe de l'amortisseur 2 (Fig. 2 à 4). En comparant les figures 3 et 4, on voit qu'une rotation $\varepsilon$ entre le corps 2 de l'amortisseur et le porte-moyeu 5 déplace le centre de la butée à bille 42, ce qui décale de façon correspondante la coupelle inférieure 41.

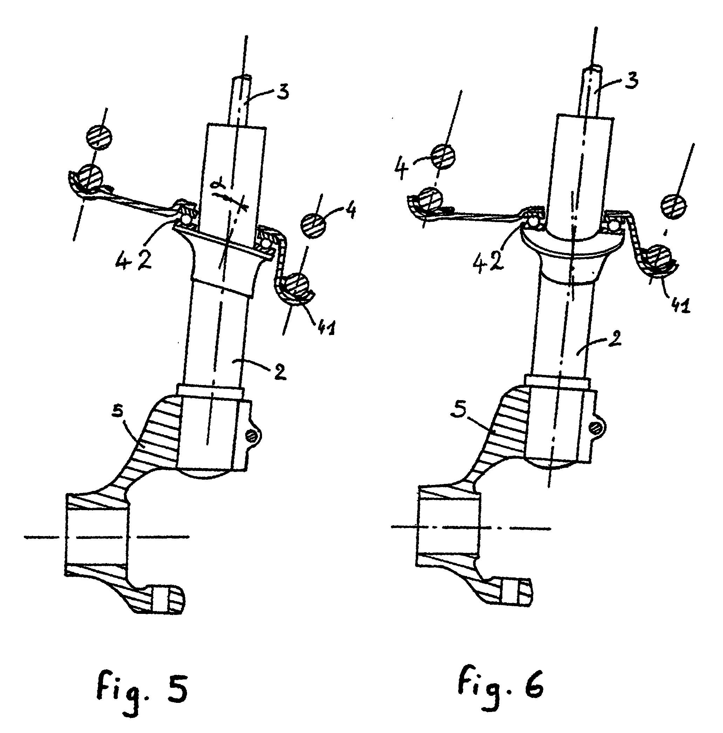

La figure 5 illustre une jambe dont la butée à bille 42, également située sous la coupelle inférieure 41, est inclinée de telle sorte que la normale à la surface d'appui de la coupelle inférieure forme un angle $\alpha$ par rapport à l'axe de la tige 3. La figure 6 montre que, par rotation relative du corps 2 par rapport au porte-moyeu 5, on fait varier l'orientation de l'axe de la butée à billes 42 et l'attitude du ressort 4 sur la coupelle inférieure 41. Une combinaison de l'excentration e et de l'inclinaison $\alpha$ peut être également utilisée.

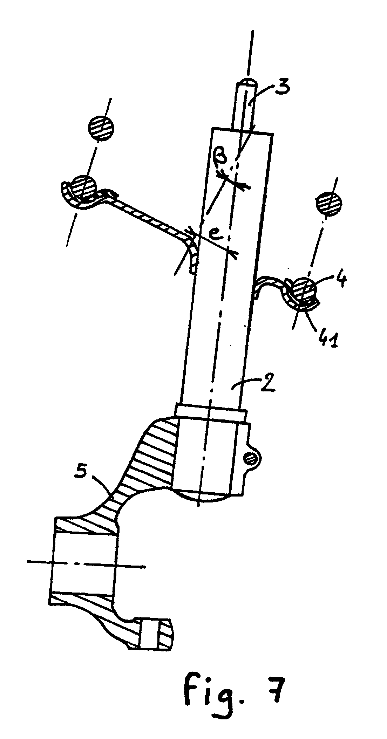

Dans le cas d'une jambe de force de train arrière, ou d'une jambe de train avant dans laquelle la butée à billes est située au dessus de la coupelle supérieure d'appui du ressort (figure 7), la coupelle inférieure 41 d'appui du ressort 4 est solidaire du corps 2 de l'amortisseur. L'axe de la coupelle inférieure est incliné d'un angle $\beta$ par rapport à l'axe du corps d'amortisseur 2 et/ou excentré d'une distance e par rapport à l'axe du corps d'amortisseur 2. Là encore, le réglage consiste à orienter angulairement le corps 2 de l'amortisseur par rapport au porte-moyeu 5. La modification de ladite orientation permet de changer la position de la coupelle inférieure 41 par rapport à la coupelle supérieure et ainsi d'ajuster la direction de poussée du ressort 4.

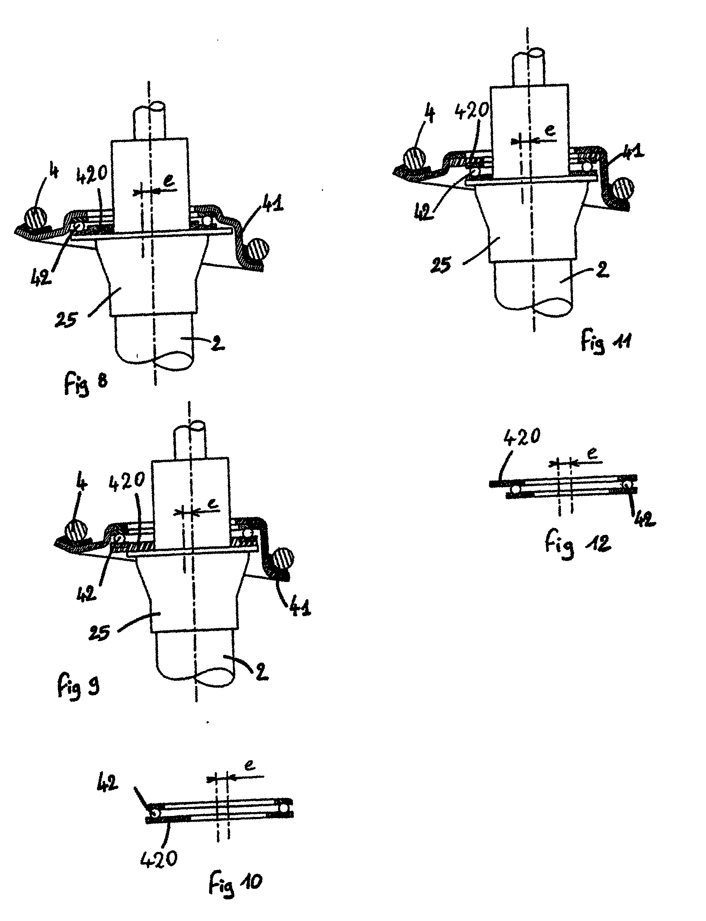

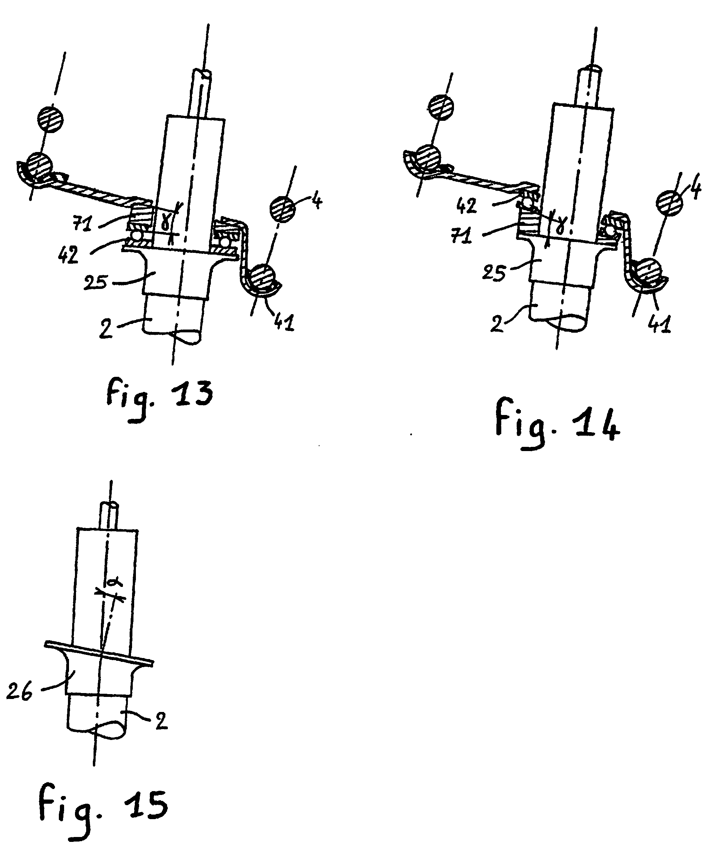

Les figures 8 à 12 illustrent un réglage par rotation d'un excentrique : la coupelle inférieure 41 est montée sur le corps 2 d'amortisseur par l'intermédiaire d'un excentrique 420 réglable en rotation. L'excentrique peut faire partie de la butée à bille 42 (figures 10 et 12) ou être indépendant de celle-ci (figures 8, 9 et 11). La rotation de l'excentrique 420 par rapport au corps 2 (figure 8 et 9), ou la rotation de l'excentrique 420 par rapport à la coupelle 41 ( figure 11) déplace la coupelle 41 par rapport au corps 2. On pourrait aussi monter la coupelle supérieure sur la caisse par le biais d'un organe de liaison pourvu d'un excentrique.

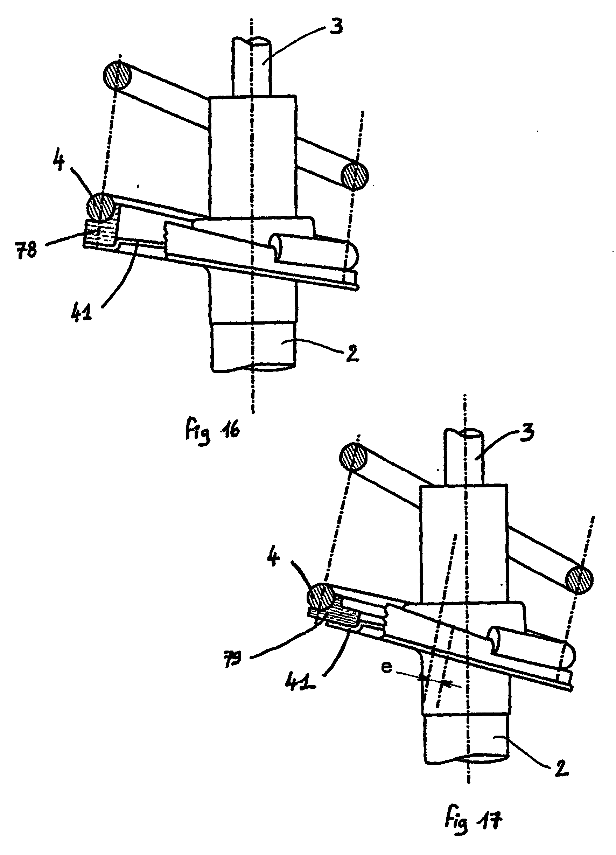

Les figures 13 et 14 montrent le réglage utilisant une cale biaise 71 comportant une section d'épaisseur maximale et une section d'épaisseur minimale diamétralement opposée à la précédente, l'épaisseur variant continûment entre lesdites sections, ladite cale biaise 71 supportant ladite coupelle inférieure par l'une de ses faces, ladite cale biaise 71 étant réglable par rotation relative. Cette disposition trouve application par exemple dans le cas d'une jambe de force de train avant, dans laquelle la butée à billes 42 est située sous la coupelle inférieure 41. Bien entendu, l'utilisation comme expliquée d'une cale biaise telle que la cale 71 pour supporter la coupelle supérieure (utilisation non représentée) permettrait aussi d'agir sur la coupelle supérieure.

La cale biaise 71, dont les faces sont inclinées l'une par rapport à l'autre d'un angle γ, est intercalée entre la coupelle inférieure 41 et la butée à billes 42 (fig. 13), ou entre la butée à billes 42 et la collerette d'appui 25 solidaire du corps 2 de l'amortisseur (fig. 14). En variante, l'axe de la face d'appui de la collerette 26 peut être incliné d'un angle α par rapport à l'axe du corps 2 de l'amortisseur (fig. 15), et pourrait en outre supporter une cale biaise. Le réglage consiste à orienter angulairement la cale biaise 71, par rapport à ladite coupelle 41 (figure 13) ou par rapport audit corps 2 (figure 14). La modification de ladite orientation permet de changer l'inclinaison de la coupelle inférieure 41 par rapport à l'axe de l'amortisseur 2, et ainsi d'ajuster la direction de poussée du ressort 4. Après réglage, la cale biaise 71 sera de préférence solidarisée avec la coupelle inférieure 41 (fig. 13) ou avec la collerette d'appui 25 (fig. 14) au moyen d'un dispositif d'arrêt mécanique, ou par collage. Le même principe de réglage s'applique également à des jambes de force dépourvues de butée à billes, ou à des jambes de force dans lesquelles la butée à billes 42 est située au dessus de la coupelle supérieure d'appui du ressort.

La figure 16 illustre un anneau 78 formant entretoise intercalé entre ressort 4 et coupelle, ici la coupelle inférieure 41. Le siège d'une des coupelles est matérialisé par ledit anneau 78 disposé sur le pourtour de ladite coupelle 41, mobile en rotation sur ledit pourtour, ledit anneau formant entretoise entre le ressort et ladite coupelle, la surface d'appui dudit anneau sur la coupelle étant une surface de révolution, ledit anneau formant ayant une section d'épaisseur maximale et une section d'épaisseur minimale, ledit anneau étant réglable par rotation relative par rapport à ladite coupelle. A la figure 17, on voit une variante dans laquelle l'anneau 79, outre une épaisseur variable, présente un siège excentré par rapport à la surface d'appui sur la coupelle 41, qui est de révolution. Dans les deux cas, le réglage se fait par rotation relative de l'anneau 78 ou 79 par rapport à la coupelle 41, le ressort 4 restant en appui sur l'anneau sans mouvement relatif. Le caractère excentrique de l'anneau peut aussi être utilisé indépendamment de la propriété de variation d'épaisseur, si l'allure du ressort le permet.

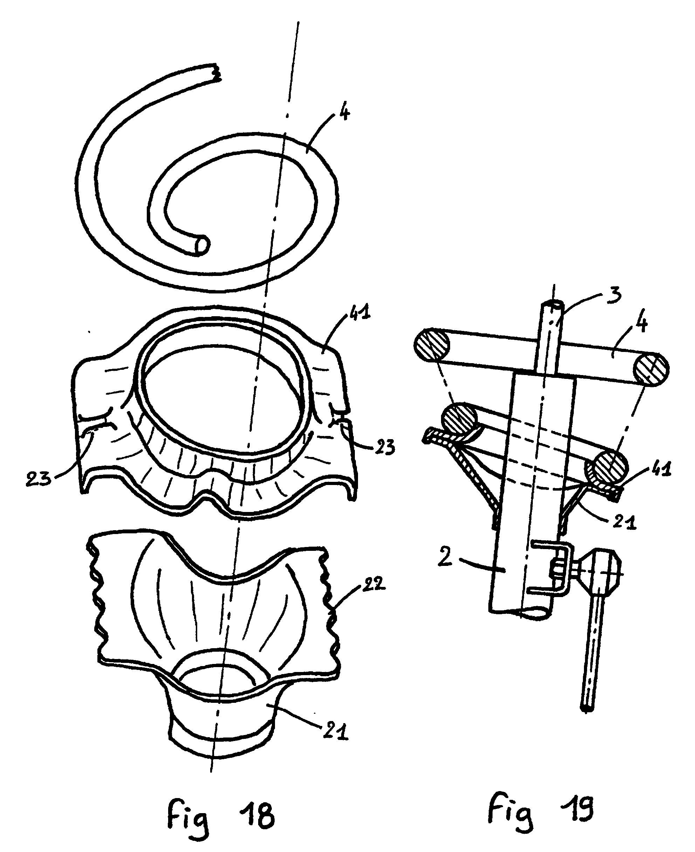

Dans le cas d'une jambe de force de train non directeur ou de train directeur dans lequel la butée à billes est située au dessus de la coupelle supérieure d'appui du ressort (figures 18 à 21), on peut aussi réaliser une jambe de force dans laquelle lesdits moyens de réglage comprennent essentiellement la disposition suivante : la coupelle inférieure 41 est posée sur une collerette 21 solidaire du corps 2 de l'amortisseur, ladite collerette formant glissière guidant ladite coupelle en translation dans un plan coupant l'axe de l'amortisseur, ladite jambe comportant des moyens pour sélectionner une position relative choisie de ladite coupelle inférieure par rapport à ladite collerette et pour immobiliser ladite coupelle inférieure et ladite collerette dans la position choisie.

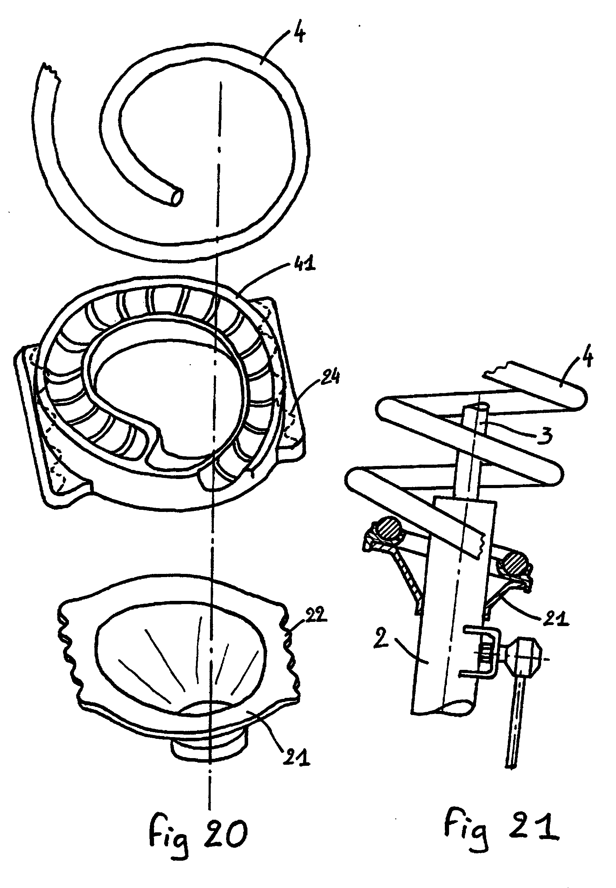

Dans l'exemple décrit, la translation relative entre coupelle inférieure 41 et collerette 21 se fait selon une direction perpendiculaire au plan des figures 19 et 21. Une denture 22 est réalisée sur deux bords parallèles et opposés de la collerette 21 formant glissière (figure 18 et 20). Cette denture assure à la fois le guidage en translation (par lesdits bords parallèles) de la coupelle inférieure 41 et permet l'immobilisation dans la position relative, par la denture elle-même.

La coupelle inférieure 41 peut être réalisée par emboutissage d'une feuille métallique (figures 18 et 19). Dans ce cas, la coupelle inférieure comporte deux bords parallèles repliés. Une nervure 23, visible à la figure 18, est réalisée au milieu de chacun des bords repliés. Cette nervure 23 vient s'engager dans la denture 22 de la collerette 21 pour figer la position relative choisie.

La coupelle inférieure 41 peut également être réalisée par moulage (figures 20 et 21). Cette coupelle inférieure possède alors deux oreilles 24 (figure 20) présentant à leur face inférieure une empreinte complémentaire à la denture 22. Cette empreinte vient s'engager dans la denture 22 de la collerette 21 pour figer la position relative choisie.

Les éléments de réglage décrits ci-dessus peuvent bien entendu être utiles pour apporter des corrections, quelle que soit la méthode de détection des troubles de comportement de véhicule. Ils peuvent être utilisés séparément ou, pour certains d'entre eux, combinés ensemble. L'invention permet de respecter des tolérances bien plus étroites sur les caractéristiques réelles des jambes de forces montées sur les véhicules. Les éléments de réglage peuvent être utilisés en liaison avec une mesure, par exemple de l'effort tranchant appliqué sur la tige, par exemple en découplant le haut de la tige de la coupelle supérieure ou plus généralement de l'organe de liaison à la caisse, et en mesurant l'effort nécessaire pour maintenir le haut de la tige dans sa configuration initiale, ou par toute méthode convenable. Si l'on souhaite agir sur l'effet combiné des couples Cp, la mesure des caractéristiques du système de direction, par exemple le couple exercé au volant, pour maintenir en ligne droite le véhicule en roulage sur un dévers donné, est également pertinente pour agir sur les éléments de réglage. Il existe donc plusieurs paramètres susceptibles d'être mesurés, comme l'effort tranchant sur la tige, le couple de rotation autour de l'axe de pivot, ou le couple au volant, ou d'autres paramètres encore s'ils sont représentatifs, directement ou indirectement, du fonctionnement des jambes de force en usage réel sur le véhicule pour lequel elles sont dessinées.

On peut ainsi envisager d'affiner le réglage des véhicules en fin de chaîne de fabrication. Ils peuvent aussi être utilisés de façon plus expérimentale, en observant l'influence du réglage par exemple grâce à un plan d'expérience pour chaque véhicule équipé de jambes de force selon l'invention, et en bâtissant ainsi des règles de correction à usage des spécialistes des trains roulants. Ils peuvent ainsi notamment être utilisés pour effectuer un réglage sur véhicule, au cours d'opérations d'entretien.

Suivant un autre aspect de l'invention, il est proposé d'intervenir sur les jambes pendant leur fabrication, avant montage sur véhicule. On effectue une mesure de l'effort tranchant $\vec{T}$ et/ou du couple Cp tels qu'ils apparaîtront sur chaque jambe lorsqu'elle sera montée sur un véhicule. Cette mesure peut se faire lors de l'assemblage de la jambe de force. Cette mesure peut être réalisée dans de bonnes conditions industrielles au moyen d'un appareil robuste tel que décrit ci-dessous, dont la configuration est réglée en fonction des caractéristiques du véhicule devant recevoir ladite jambe de force. Selon le résultat de la mesure, on agit sur les moyens de réglage de l'orientation de la force du ressort sur la coupelle supérieure, puis on immobilise l'élément de réglage.

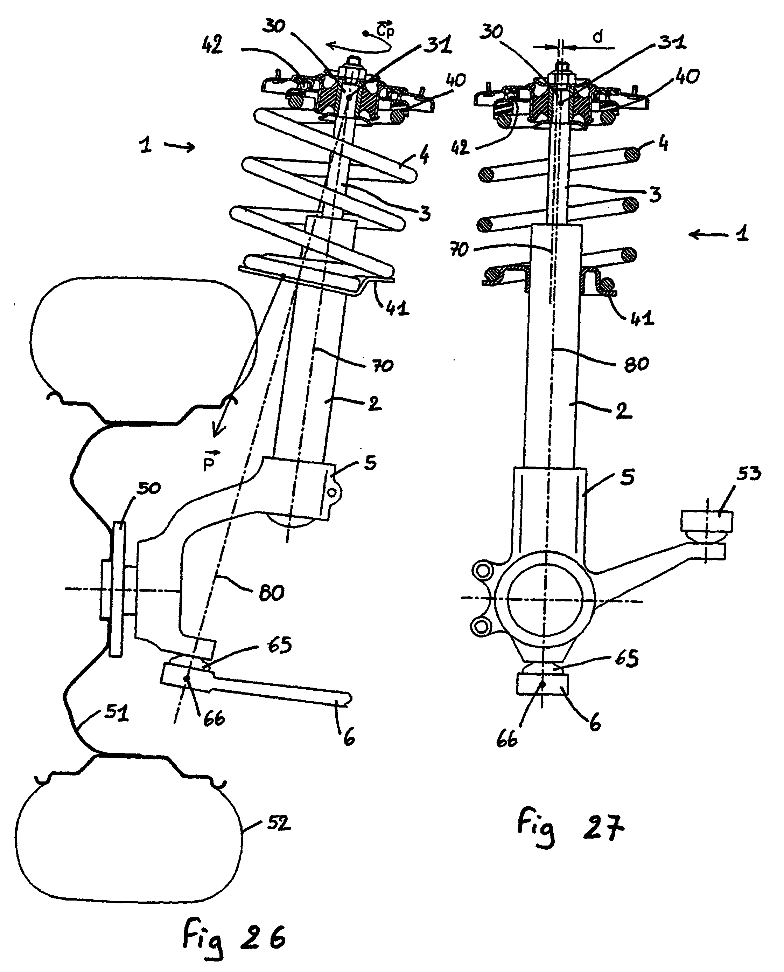

L'invention propose également une adaptation spécifique aux trains directeurs, illustrée aux figures 26 à 34. Au cours d'un mouvement de braquage, actionné par le système de direction relié au porte moyeu 5 par une biellette 53 par l'intermédiaire d'une rotule, l'ensemble jambe, porte-moyeu, moyeu et roue pivote autour de l'axe de pivot 80, défini par les points 31 et 66.

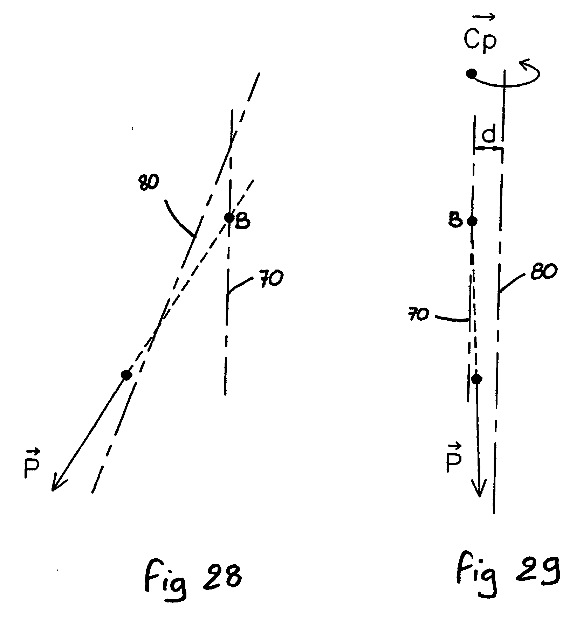

La jambe de force 1 comporte une butée à billes 42 qui permet d'effectuer un braquage sans solliciter le ressort 4 en torsion. En effet, la poussée du ressort 4 s'exerce entre la caisse du véhicule et le corps 2 de l'amortisseur. Ledit corps d'amortisseur effectue une rotation autour de l'axe de pivot 80. Cette butée à billes 42 peut être située soit entre la caisse et l'articulation élastique, soit entre l'articulation élastique et la coupelle supérieure 40 du ressort, comme cela est représenté aux figures 26 et 27, soit enfin entre la coupelle inférieure 41 et le corps 2 de l'amortisseur.

Comme on le voit dans chacun de ces cas, l'axe de rotation 70 de la butée à billes est en général distinct de l'axe de pivot 80. Dans toutes les réalisations connues, ces deux axes se coupent. En effet, l'axe de la butée à billes est généralement confondu avec l'axe commun de la tige 3 et du corps 2 d'amortisseur. Cette configuration permet de limiter les effets de couple Cp que la poussée P du ressort peut exercer autour de l'axe de pivot 80, et qui agissent sur l'équilibre du système de direction par l'intermédiaire de la biellette 53.

Malgré tous les efforts de conception visant à toujours améliorer le comportement perçu par les conducteurs, afin de non seulement construire des véhicules très sûrs, mais également des véhicules agréables à conduire, de nombreux véhicules souffrent encore aujourd'hui d'un mauvais comportement de direction. Ce comportement de direction dépend en effet d'une quantité considérable de paramètres, dont certains ont une influence mal connue mais qui peut sans doute parfois être prépondérante. Il en résulte, alors même que le concepteur a respecté toutes les règles de l'art pour dimensionner le système de direction, que le résultat ne soit pas toujours à la hauteur du soin apporté à la conception.

La présente invention propose une évolution de la conception des jambes de force permettant de maîtriser et même d'ajuster finement les effets de couple Cp que la poussée du ressort fait apparaître autour de l'axe de pivot 80, permettant ainsi de mieux maîtriser la part des jambes de suspension dans le comportement du système de direction, sans que ne soit par ailleurs modifiée la géométrie (angles et déports caractéristiques) du train avant. Cette invention propose donc aux concepteurs de suspensions un degré de liberté de conception supplémentaire totalement indépendant des paramètres habituellement pris en compte dans la définition d'un train avant. Ce paramètre supplémentaire de conception offre de plus une possibilité de réglage permettant une mise au point plus aisée de la jambe de force et de raccourcir ainsi le temps de développement de la suspension d'un futur véhicule.

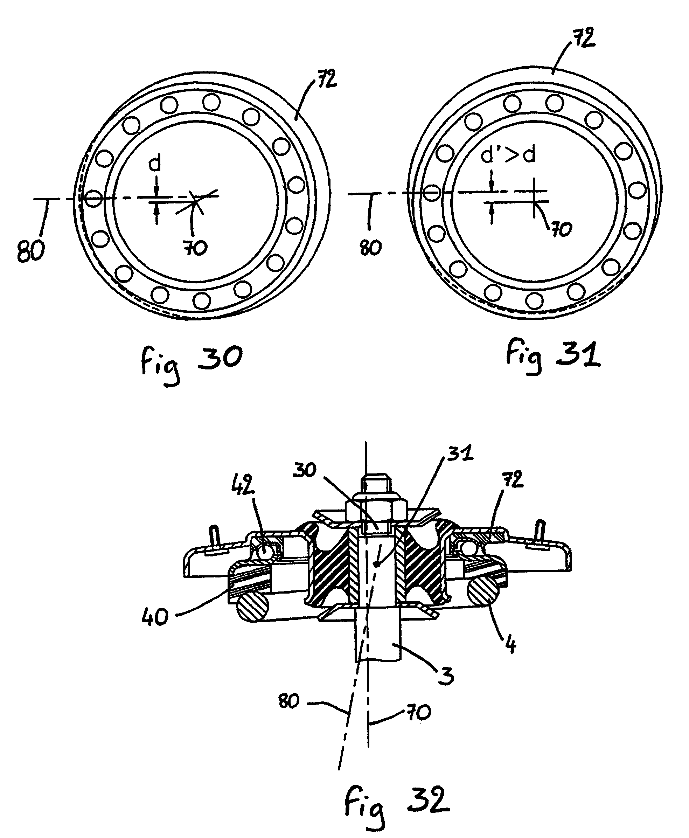

L'invention propose ainsi une jambe de force pour suspension de roue directrice de type Mac Pherson, dans laquelle l'axe de rotation 70 de la butée à billes 42 est positionné de telle façon qu'il ne coupe pas l'axe de pivot 80. Cet axe de rotation sera ainsi soit parallèle à l'axe de pivot, soit non coplanaire à l'axe de pivot. Il est alors possible, dans ces deux cas, de définir une distance d entre ces deux axes. Cette distance d est la plus petite distance mesurable entre deux points respectifs de ces axes. Elle est relevée dans une direction perpendiculaire à chacun de ces axes, comme cela est représenté à la figure 27 ou 29 dans le cas particulier d'une butée 42 située au dessus de la coupelle supérieure 40.

Grâce à une telle construction, il est possible de maîtriser le couple Cp exercé par la poussée P du ressort autour de l'axe de pivot 80, comme cela est décrit dans les lignes qui suivent, et illustré par les figures 28 et 29. La combinaison des deux couples Cp exercés par les jambes droite et gauche agit ainsi sur le système de direction d'une manière parfaitement maîtrisée.

Le ressort exerce un effort de poussée P sur la coupelle inférieure 41. Cette poussée P transite par la butée à billes 42. Cette butée à billes 42 présentant un frottement interne très faible, la poussée P du ressort exerce dans ces conditions un moment de rotation nul suivant l'axe 70 de la butée. Ce moment nul se traduit par le fait que la direction de poussée P du ressort coupe l'axe 70 de la butée à billes 42 en un point B comme cela est représenté aux figures 28 et 29. Si, en raison de l'agencement de la jambe de force, la direction de poussée P issue du point B ne coupe pas l'axe de pivot 80, il en résulte que la poussée P du ressort exerce autour de l'axe de pivot 80 un couple Cp proportionnel à la composante de ladite poussée P du ressort perpendiculaire à l'axe de pivot et à la distance d précédemment décrite. La parfaite maîtrise de la distance d et de son orientation permet de donner au couple Cp une valeur très précise.

Cette distance d peut être définie à la conception de la jambe de force, de manière à bien mieux maîtriser les effets combinés des couples Cp des jambes droite et gauche sur le système de direction.

Selon l'invention, cette distance d peut être ajustée. Dans ce dernier cas, il devient possible de régler l'action combinée des couples Cp des deux jambes de manière à corriger un éventuel défaut de comportement du système de direction rencontré sur le véhicule, quelle qu'en soit la méthode de détection. On peut ainsi effectuer ledit réglage en fin de chaîne de fabrication, ou de façon plus expérimentale en observant l'influence dudit réglage par exemple au moyen d'un plan d'expérience pour chaque véhicule équipé de jambes selon l'invention, et en bâtissant ainsi des règles de correction à l'usage des spécialistes des trains roulants. Ce réglage peut être ainsi notamment utilisé pour apporter une éventuelle correction du comportement de la direction, au cours d'opérations d'entretien du véhicule. Il est également possible d'effectuer le réglage au cours de l'opération d'assemblage de la jambe, grâce à un banc capable de mesurer le couple Cp. On peut utiliser par exemple un banc comme l'un de ceux exposés ci-dessus. Les figures 27, 30 à 32 illustrent une butée à billes 42 excentrée. Le réglage se fait par rotation relative entre une cale 72 montée de façon centrée dans le support directement en contact avec la caisse du véhicule, ladite cale 72 ayant un logement excentré pour recevoir la butée à billes 42. On voit par exemple que l'axe de la butée est plus éloigné de l'axe de pivot 80 à la figure 31 que à la figure 30. Dans cet exemple, le réglage est une opération faite en atelier de maintenance du véhicule, ou lors du montage de la jambe de force sur un banc de mesure.

Les moyens de réglage de la distance d peuvent agir par translation de la butée, sans changer l'orientation de son axe, par exemple en orientant la bague supérieure 74 de la butée 42 qui est excentrée par rapport à la tige 3 de l'amortisseur (figures 30 à 34). Ce réglage sera défini de telle manière qu'il modifiera le moins possible les caractéristiques de poussée du ressort, et notamment sa rigidité. C'est ainsi que la translation de la butée sera réalisée préférentiellement suivant un plan perpendiculaire à l'axe géométrique du ressort, et son basculement sera réalisée autour d'un axe coupant préférentiellement l'axe géométrique du ressort.

La distance d peut être également ajustée au cours du roulage du véhicule pour corriger un défaut de comportement de direction dès que celui-ci sera détecté. Le défaut pourra être constaté par le conducteur du véhicule. Dans ce cas, la correction réalisée par l'ajustement de la distance d sera effectuée par un actionneur piloté par le conducteur du véhicule lui-même. La détection du défaut peut également être automatique, par exemple par la mesure du couple qu'il faut exercer au volant pour maintenir le véhicule sur une trajectoire rectiligne. Dans ce cas, l'ajustement de la distance d peut être piloté par un système de correction actif entièrement automatique.

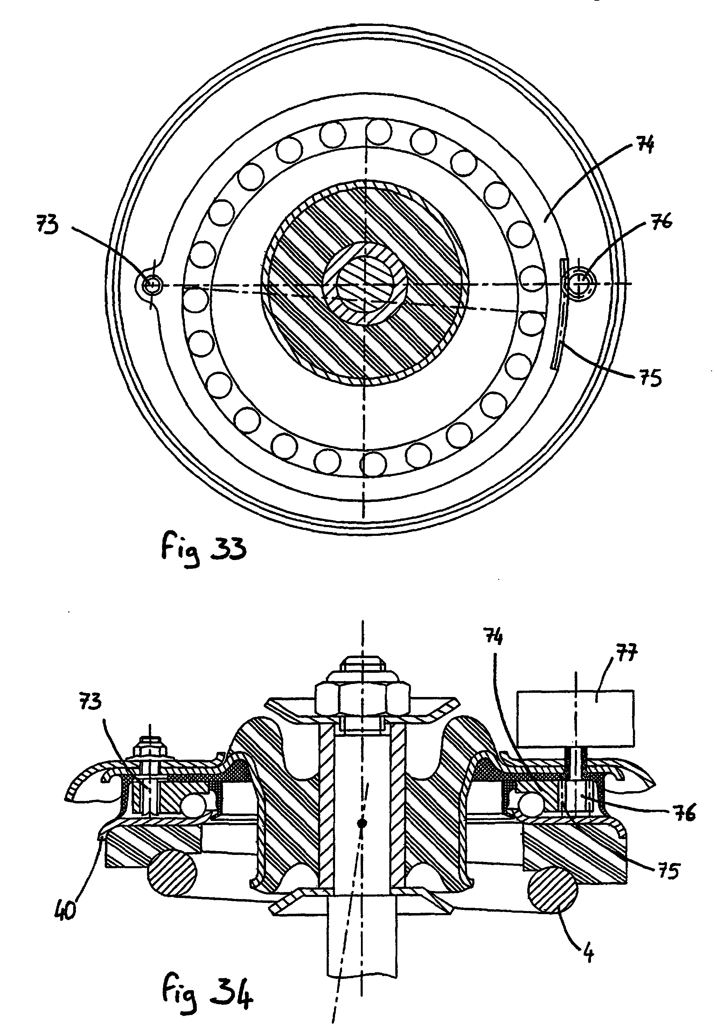

Les figures 33 et 34 représentent un exemple de réalisation incluant un système motorisé permettant de faire varier la distance d. La bague supérieure 74 de la butée à billes 42 prend appui sur un revêtement à faible frottement. Cette bague 74 est guidée en rotation autour d'un axe 73 perpendiculaire au plan de ladite bague et situé en un point de sa périphérie, et comporte à l'opposé de cet axe une crémaillère 75 actionnée par un pignon 76 lié à l'axe d'un système de motorisation électrique 77. Cette motorisation 77 présente une caractéristique d'irréversibilité, c'est-à-dire qu'un couple exercé sur l'axe du pignon 76 ne peut provoquer sa rotation en l'absence de tension électrique d'alimentation. Cette motorisation peut être réalisée par exemple au moyen d'un moteur électrique accouplé à un réducteur irréversible, par exemple un système à vis sans fin, ou elle peut être réalisée au moyen d'un moteur piézo-électrique entraînant directement le pignon 76.

**Revendications**

**1.** Jambe de force d'une suspension de roue de type Mac Pherson, comportant un amortisseur pourvu d'un corps (2) et d'une tige (3), ladite jambe comportant un ressort (4) hélicoïdal entourant ladite tige (3) et exerçant une poussée selon un axe de poussée, comportant une coupelle inférieure (41) d'appui supportée par le corps (2) de l'amortisseur, ladite coupelle inférieure comportant un siège inférieur recevant l'une des extrémités dudit ressort, et une coupelle supérieure (40) d'appui destinée à prendre appui sur la caisse du véhicule, ladite coupelle supérieure comportant un siège supérieur recevant l'autre des extrémités dudit ressort, ladite coupelle supérieure étant traversée par ladite tige, le corps d'amortisseur comportant une portée d'accrochage à un porte-moyeu (5) coopérant avec des moyens d'accrochage, ledit porte-moyeu définissant un axe de rotation de ladite roue, lesdits moyens d'accrochage imposant une position azimutale prédéterminé entre le corps et le porte-moyeu, **caractérisé en ce que** ladite jambe comporte des moyens de réglage de la position relative et/ou de l'orientation de l'axe de la poussée du ressort par rapport à ladite portée d'accrochage.

**2.** Jambe selon la revendication 1, dans laquelle lesdits moyens de réglage comprennent essentiellement la disposition suivante : ladite coupelle inférieure est montée sur le corps d'amortisseur par l'intermédiaire d'un excentrique (420) réglable en rotation.

**3.** Jambe selon la revendication 1, dans laquelle lesdits moyens de réglage comprennent essentiellement la disposition suivante : l'une des coupelles repose sur une cale biaise (71), comportant une section d'épaisseur maximale et une section d'épaisseur minimale diamétralement opposée à la précédente, l'épaisseur variant continûment entre lesdites sections, ladite cale biaise supportant ladite coupelle par l'une de ses faces, ladite cale biaise étant réglable par rotation relative.

4. Jambe selon la revendication 3, dans laquelle ladite coupelle est la coupelle inférieure, ladite cale biaise (71) recevant sur l'une de ses faces la coupelle inférieure (41), l'autre des faces de ladite cale biaise étant montée sur une collerette d'appui solidaire du corps de l'amortisseur.

5. Jambe selon la revendication 1, dans laquelle lesdits moyens de réglage comprennent essentiellement la disposition suivante : le siège d'une des coupelles est matérialisé par un anneau (78) disposé sur le pourtour de ladite coupelle, mobile en rotation sur ledit pourtour, ledit anneau formant entretoise entre le ressort et ladite coupelle, la surface d'appui dudit anneau sur la coupelle étant une surface de révolution, ledit anneau ayant une section d'épaisseur maximale et une section d'épaisseur minimale, ledit anneau étant réglable par rotation relative par rapport à ladite coupelle.

6. Jambe selon la revendication 1, dans laquelle lesdits moyens de réglage comprennent essentiellement la disposition suivante : le siège d'une des coupelles est matérialisé par un anneau formant excentrique (79), comportant une face de montage sur ladite coupelle, ledit anneau étant réglable par rotation relative par rapport à la coupelle.

7. Jambe selon la revendication 1, dans laquelle l'axe de la coupelle inférieure est incliné et/ou excentré par rapport à l'axe du corps d'amortisseur et dans laquelle lesdits moyens de réglage comprennent essentiellement la disposition suivante : les moyens d'accrochage à un porte-moyeu comportent des moyens d'indexation de l'orientation relative du corps de l'amortisseur par rapport au porte-moyeu, lesdits moyens d'indexations étant disposés sur ou au voisinage de la portée d'accrochage, le réglage étant obtenu par rotation relative dudit corps d'amortisseur par rapport au porte-moyeu.

8. Jambe selon la revendication 1, dans laquelle lesdits moyens de réglage comprennent essentiellement la disposition suivante : la coupelle inférieure (41) est posée sur une collerette (22) solidaire du corps (2) de l'amortisseur, ladite collerette formant glissière guidant ladite coupelle en translation dans un plan coupant l'axe de l'amortisseur, ladite jambe comportant des moyens pour sélectionner une position relative choisie de ladite coupelle inférieure par rapport à ladite collerette et pour immobiliser ladite coupelle inférieure et ladite collerette dans la position choisie.

9. Jambe de force d'une suspension de roue de type Mac Pherson, comportant un amortisseur pourvu d'un corps (2) et d'une tige (3), ladite jambe comportant un ressort (4) hélicoïdal entourant ladite tige (3), comportant une coupelle inférieure (41) d'appui supportée par le corps (2) de l'amortisseur, ladite coupelle inférieure comportant un siège inférieur recevant l'une des extrémités dudit ressort, et une coupelle supérieure (40) d'appui destinée à prendre appui sur la caisse du véhicule, ladite coupelle supérieure comportant un siège supérieur recevant l'autre des extrémités dudit ressort, ladite coupelle supérieure étant traversée par ladite tige, le corps d'amortisseur comportant une portée d'accrochage à un porte-moyeu (5) coopérant avec des moyens d'accrochage, ledit porte-moyeu définissant un axe de rotation de ladite roue, l'une des coupelles supérieures et inférieures contenant une butée à billes autorisant le braquage du porte-moyeu, **caractérisée en ce que** l'axe de ladite butée à billes (7) et l'axe de pivot (80) sont non concourants et que la jambe de force comporte des moyens pour régler la distance entre l'axe de ladite butée à billes et l'axe de pivot.

10. Jambe de force selon la revendication 9, dans laquelle lesdits moyens comportent une bague supérieure (74) de la butée à billes 42 prenant appui sur un revêtement à faible frottement, ladite bague (74) étant guidée en rotation autour d'un axe (73) perpendiculaire au plan de ladite bague et situé en un point de sa périphérie, et comportant à l'opposé de cet axe une crémaillère (75) actionnée par un pignon (76) lié à l'axe d'un système de motorisation électrique irréversible.

## Claims

1. A strut of a MacPherson-type wheel suspension, comprising a shock absorber provided with a body (2) and a rod (3), said strut comprising a coil spring (4) surrounding said rod (3) and exerting a thrust along a thrust axis, comprising a lower retainer (41) supported by the body (2) of the shock absorber, said lower retainer having a lower seat receiving one of the ends of said spring, and an upper retainer (40) intended to rest on the body of the vehicle, said upper retainer comprising an upper seat receiving the other end of said spring, said upper retainer being traversed by said rod, the shock absorber body having a surface for coupling to a hub holder (5) cooperating with coupling means, said hub holder defining an axis of rotation of said wheel, said coupling means imposing a predetermined azimuthal position between the body and the hub holder, **characterised in that** said strut comprises means for adjusting the relative position and/or the orientation of the axis of the thrust of the spring with respect to said coupling surface.

2. A strut according to Claim 1, in which said adjustment means comprise essentially the following arrangement: said lower retainer is mounted on the shock absorber body via an eccentric (420) which is adjustable in rotation.

3. A strut according to Claim 1, in which said adjustment means comprise essentially the following arrangement: one of the retainers rests on a wedge (71) comprising a section of maximum thickness and a section of minimum thickness diametrically opposite the preceding section, the thickness varying continuously between said sections, said wedge supporting said retainer on one of its faces, said wedge being adjustable by relative rotation.

4. A strut according to Claim 3, in which said retainer is the lower retainer, said wedge (71) receiving the lower retainer (41) on one of its faces, the other face of said wedge being mounted on a supporting collar integral with the body of the shock absorber.

5. A strut according to Claim 1, in which said adjustment means comprise essentially the following arrangement: the seat of one of the retainers is formed by a ring (78) arranged on the periphery of said retainer and movable in rotation on said periphery, said ring forming a brace between the spring and said retainer, the resting surface of said ring on the retainer being a surface of revolution, said ring having a section of maximum thickness and a section of minimum thickness, said ring being adjustable by rotation relative to said retainer.

6. A strut according to Claim 1, in which said adjustment means comprise essentially the following arrangement: the seat of one of the retainers consists of a ring forming an eccentric (79), having a mounting face on said retainer, said ring being adjustable by rotation relative to the retainer.

7. A strut according to Claim 1, in which the axis of the lower retainer is inclined or eccentric relative to the axis of the shock absorber body and in which said adjustment means comprise essentially the following arrangement: the means for coupling to a hub holder comprise means for indexing the relative orientation of the body of the shock absorber with respect to the hub holder, said indexing means being arranged on or in the vicinity of the coupling surface, the adjustment being obtained by rotation of said shock absorber body relative to the hub holder.

8. A strut according to Claim 1, in which said adjustment means comprise essentially the following arrangement: the lower retainer (41) is placed on a collar (22) which is integral with the body (2) of the shock absorber, said collar forming a slideway guiding said retainer in translation in a plane intersecting the axis of the shock absorber, said strut comprising means for selecting a selected relative position of said lower retainer with respect to said collar and for locking said lower retainer and said collar in the position selected.

9. A strut of a MacPherson-type wheel suspension, comprising a shock absorber provided with a body (2) and a rod (3), said strut comprising a coil spring (4) surrounding said rod (3), comprising a lower retainer (41) supported by the body (2) of the shock absorber, said lower retainer comprising a lower seat receiving one of the ends of said spring, and an upper retainer (40) intended to rest on the body of the vehicle, said upper retainer comprising an upper seat receiving the other end of said spring, said upper retainer being traversed by said rod, the shock absorber body comprising a surface for coupling to a hub holder (5) cooperating with coupling means, said hub holder defining an axis of rotation of said wheel, one of the upper and lower retainers containing a ball bearing permitting the steering of the hub holder, **characterised in that** the axis of said ball bearing (7) and the pivot axis (80) are not concurrent, and that the strut comprises means for adjusting the distance between the axis of said ball bearing and the pivot axis.

10. A strut according to Claim 9, in which said means comprise an upper ring (74) of the ball bearing (42) resting on a lining of low friction, said ring (74) being guided in rotation around an axis (73) perpendicular to the plane of said ring and located at a point on its periphery, and comprising opposite said axis a rack (76) which is actuated by a pinion (77) connected to the axis of an irreversible electric motorising system.

### Patentansprüche

1. Federbein einer McPherson-Radaufhängung, mit einem Stoßdämpfer, der mit einem Gehäuse (2) und einer Stange (3) versehen ist, wobei das genannte Federbein eine wendelförmige Feder (4) aufweist, die die genannte Stange (3) umgibt und eine Druck- bzw. Längskraft längs einer Druck- bzw. Längsachse ausübt, mit einem unteren Auflageteller (41), der vom Gehäuse (2) des Stoßdämpfers getragen ist, wobei der genannte untere Teller einen unteren Sitz aufweist, der eines der Enden der genannten Feder aufnimmt, und mit einem oberen Auflageteller (40), der dazu bestimmt ist, auf der Fahrzeugkarosserie aufzusitzen, wobei der genannte obere Teller einen oberen Sitz aufweist, der das andere Ende der genannten Feder aufnimmt, der genannte obere Teller von der genannten Stange durchsetzt wird, das Gehäuse des Stoßdämpfers einen Bereich zur Verankerung an einem Nabenträger (5) aufweist, der mit Verankerungsmitteln zusammenwirkt, der genannte Nabenträger eine Drehachse des genannten Rades bestimmt, und die genannten Verankerungsmittel eine bestimmte azimutale Lage zwischen dem Gehäuse und dem Nabenträger zuweisen, **dadurch gekennzeichnet, daß** das genannte Federbein Mittel zur Regulierung der Relativlage und/oder der Ausrichtung der Achse der Druckkraft der Feder in Bezug auf den genannten Verankerungsbereich aufweist.

2. Federbein nach Anspruch 1, worin die genannten Regulierungsmittel im wesentlichen die folgende Anordnung aufweisen: der untere Teller ist auf dem Körper des Stoßdämpfers mittels eines Exzenters (420) angebracht, der durch Drehung einstellbar ist.

3. Federbein nach Anspruch 1, worin die genannten Regulierungsmittel im wesentlichen die folgende Anordnung aufweisen: der eine der Teller ruht auf einer schrägen Scheibe (71), die einen Abschnitt mit maximaler Dicke und einen Abschnitt mit minimaler Dicke aufweist, der dem vorangehenden diametral gegenüberliegt, wobei sich die Dicke kontinuierlich zwischen den genannten Abschnitten ändert, die genannte, schräge Scheibe den genannten Teller durch eine ihrer Hauptflächen unterstützt, und die genannte, schräge Scheibe durch relative Drehung einstellbar ist.

4. Federbein nach Anspruch 3, worin der genannte Teller der untere Teller ist, die genannte schräge Scheibe (71) auf einer ihrer Hauptflächen den unteren Teller (41) aufnimmt, und die andere der Flächen der genannten schrägen Scheibe auf einem Auflagebund angebracht ist, der fest mit dem Gehäuse des Stoßdämpfers verbunden ist.

5. Federbein nach Anspruch 1, worin die genannten Regulierungsmittel im wesentlichen die folgende Anordnung aufweisen: der Sitz einer der Teller ist aus einem Ring (78) gebildet, der über dem Umfang des genannten Tellers angeordnet ist und drehbeweglich auf dem genannten Umfang angeordnet ist, wobei der genannte Ring ein Zwischenstück zwischen der Feder und dem genannten Teller bildet, die Auflagefläche des genannten Ringes auf dem Teller eine Rotationsfläche ist, der genannte Ring einen Abschnitt mit maximaler Dicke und einen Abschnitt mit minimaler Dicke aufweist und der genannte Ring durch Drehung relativ zum genannten Teller einstellbar ist.

6. Federbein nach Anspruch 1, worin die genannten Regulierungsmittel im wesentlichen die folgende Anordnung aufweisen: der Sitz eines der Teller ist durch einen Exzenter bildenden Ring (79) hergestellt, der eine Montagefläche auf dem genannten Teller aufweist, wobei der genannte Ring durch Drehung relativ zum Teller einstellbar ist.

7. Federbein nach Anspruch 1, worin die Achse des unteren Tellers in Bezug auf die Achse des Gehäuses des Stoßdämpfers geneigt und/oder exzentrisch angeordnet ist, und worin die genannten Regulierungsmittel im wesentlichen die nachfolgende Anordnung aufweisen: die Mittel zur Verankerung mit einem Nabenträger weisen Indexierungsmittel zur relativen Orientierung des Gehäuses des Stoßdämpfers bezüglich des Nabenträgers auf, wobei die genannten Indexierungsmittel auf dem Verankerungsbereich oder nahe diesem angeordnet sind, und wobei die Regulierung durch Relativdrehung des genannten Gehäuses des Stoßdämpfers in Bezug auf den Nabenträger erreicht wird.

8. Federbein nach Anspruch 1, worin die genannten Regulierungsmittel im esentlichen die nachfolgende Anordnung aufweisen: der untere Teller (41) ist auf einen Bund (22) aufgesetzt, der fest mit dem Gehäuse (2) des Stoßdämpfers verbunden ist, der genannte Bund bildet eine Gleitführung, die den genannten Teller in Translation in einer Ebene führt, die die Achse des Stoßdämpfers schneidet, und das genannte Federbein weist Mittel auf, um eine gewählte Relativlage des genannten, unteren Tellers auszusuchen und um den genannten unteren Teller und den genannten Bund in der gewählten Lage festzulegen.

9. Federbein einer McPherson-Radaufhängung, mit einem Stoßdämpfer, der mit einem Gehäuse (2) und mit einer Stange (3) versehen ist, wobei das genannte Federbein eine wendelförmige Feder (4) aufweist, die die genannte Stange (3) umgibt, mit einem unteren Auflageteller (41), der vom Gehäuse (2) des Stoßdämpfers getragen ist, wobei der genannte untere Teller einen unteren Sitz aufweist, der eine der Enden der genannten Feder aufnimmt, und einem oberen Auflageteller (40), der dazu bestimmt ist, sich auf der Karosserie des Fahrzeugs abzustützen, wobei der genannte, obere Teller einen oberen Sitz aufweist, der das andere der Enden der genannten Feder aufnimmt, der genannte, obere Teller von der genannten Stange durchsetzt wird, das Gehäuse des Stoßdämpfers einen Bereich zur Verankerung an einem Nabenträger (5) aufweist, der mit Verankerungsmitteln zusammenwirkt, der genannte Nabenträger die Drehachse des genannten Rades festlegt, und vom unteren und oberen Teller einer ein Kugellager enthält, das den Lenkeinschlag des Nabenträgers ermöglicht, **dadurch gekennzeichnet, daß** die Achse des genannten Kugellagers (7) und die Schwenkachse (80) nicht durch denselben Punkt gehen, und daß das Federbein Mittel aufweist, um den Abstand zwischen der Achse des genannten Kugellagers und der Schwenkachse einzuregulieren.

10. Federbein nach Anspruch 9, worin die genannten Mittel einen oberen Ring (74) des Kugellagers 42 aufweisen, der auf einer Verkleidung mit niedriger Reibung aufsitzt, wobei der genannte Ring (74) zur Drehung rund um eine Achse (73) geführt ist, die senkrecht zur Ebene des genannten Ringes verläuft und in einem Punkt seines Umfangs sitzt, und eine Zahnstange (76) gegenüber dieser Achse, die von einem Ritzel (77) betätigt wird, das mit der Achse einer selbstsperrenden bzw. irreversiblen elektrischen Antriebseinrichtung verbunden ist.

fig 1

Fig. 2

Fig. 3

Fig. 4

Fig. 5

Fig. 6

Fig. 7

Fig 8

Fig 11

Fig 9

Fig 12

Fig 10

Fig. 13

Fig. 14

Fig. 15

Fig 16

Fig 17

Fig 18

Fig 19

fig 20

fig 21

Fig 26

Fig 27

Fig 28

Fig 29

fig 30

fig 31

Fig 32

Fig 33

Fig 34